# EUROPÄISCHE PATENTSCHRIFT

(11) **EP 1 716 991 B1**
(45) Veröffentlichungstag und Bekanntmachung des Hinweises auf die Patenterteilung: **09.04.2008**
(21) Anmeldenummer: 06002342.1
(22) Anmeldetag: 06.02.2006
(51) Int. Cl.: B27C 5/06, B27C 5/02, B23Q 7/04, B25J 9/02

(54) **Fertigungssystem für plattenförmige Werkstücke**
Manufacturing system for plate-shaped workpieces
Système de fabrication de pièces en forme de plaque

(30) Priorität: 29.04.2005 DE 102005020119
(43) Veröffentlichungstag der Anmeldung: 02.11.2006
(73) Patentinhaber: Homag Holzbearbeitungssysteme AG, 72296 Schopfloch (DE)
(72) Erfinder: Gauss, Achim, 72280 Dornstetten/Hallwangen (DE); Gringel, Martin, 72379 Hechingen (DE)
(74) Vertreter: HOFFMANN EITLE

(56) Entgegenhaltungen:
- EP-A- 0 510 230
- EP-A- 0 512 126
- DE-A1- 19 846 819
- DE-C1- 19 601 331

## Beschreibung

### Technisches Gebiet

Die Erfindung betrifft ein Fertigungssystem mit einem Bearbeitungszentrum und einer Beschickungsvorrichtung nach dem Oberbegriff von Anspruch 1.

### Stand der Technik

Ein gattungsgemäßes Fertigungssystem ist beispielsweise aus der EP 0 510 230 B1 und der EP 0 512 126 B1 bekannt. Bei diesen Fertigungssystemen ist neben einem Bearbeitungszentrum, das eine oder mehrere Spindeln zur Bearbeitung plattenförmiger Werkstücke aus Holz, Holzwerkstoffen oder dergleichen aufweist, jeweils eine Beschickungsvorrichtung vorgesehen. Die Beschickungsvorrichtung ist entlang Führungsschienen in einer sich horizontal erstreckenden X-Richtung verfahrbar und besitzt eine Greifeinrichtung, mittels derer die zu bearbeitenden Werkstücke von einem Förderband auf einen Spanntisch des Bearbeitungszentrums überführt werden können. Diese Beschickungsvorrichtungen haben sich als störungsfrei und vielseitig erwiesen, besitzen jedoch den Nachteil, dass das Fertigungssystem insgesamt einen hohen Platzbedarf aufweist und der Bearbeitungsraum des Bearbeitungszentrums, d.h. der Bereich, in welchem die Arbeitsspindeln die zu bearbeitenden Werkstücke bearbeiten können, zumindest während des Betriebes des Fertigungssystems nur schwer zugänglich ist. Darüber hinaus ist die Steuerung der Beschickungsvorrichtung synchron zu dem Bearbeitungssystem häufig mit Schwierigkeiten verbunden. Neben derartigen Beschickungsvorrichtungen mit drei translatorischen Achsen finden zunehmend auch Knickarmroboter mit drei rotatorischen Achsen Anwendung als Beschickungsvorrichtung. Die Kinematik eines Knickarmroboters zählt aufgrund seiner Reichweite und uneingeschränkten Bewegungsfreiheit zu den flexibelsten Handhabungssystemen. Jedoch sind aufgrund der komplexen Kinematik (im Normalfall 4 bis 6 Freiheitsgrade) aufwändige und somit teuere Steuerungs- und Programmiersysteme erforderlich. Darüber hinaus weisen Knickarmroboter einen verhältnismäßig großen Platzbedarf auf und erschweren während des Betriebes des Fertigungssystems den manuellen Zugriff auf den Bearbeitungsraum des Bearbeitungszentrums.

### Darstellung der Erfindung

Es ist Aufgabe der vorliegenden Erfindung, ein Fertigungssystem der eingangs genannten Art bereitzustellen, das bei einfacher Konstruktion einen verminderten Platzbedarf und einen leichten Zugriff auf den Bearbeitungsraum des Bearbeitungszentrums ermöglicht. Diese Aufgabe wird gemäß der vorliegenden Erfindung durch ein Fertigungssystem mit den Merkmalen von Anspruch 1 gelöst. Bevorzugte Weiterbildungen der Erfindung sind in den abhängigen Ansprüchen angegeben.

Der Erfindung liegt der Gedanke zugrunde, durch eine teilweise Verschmelzung des Bearbeitungszentrums und der Beschickungsvorrichtung eine vereinfachte Konstruktion sowie einen verminderten Platzbedarf des gesamten Fertigungssystems zu erzielen. Zu diesem Zweck ist erfindungsgemäß vorgesehen, dass der erste und der zweite Ausleger, d.h. der Ausleger des Bearbeitungszentrums und der Ausleger der Beschickungsvorrichtung eine gemeinsame Führungseinrichtung, entlang derer sie in der X-Richtung verschiebbar sind, und/oder einen gemeinsamen Antrieb, mittels dessen sie in der X-Richtung verfahrbar sind, aufweisen.

Auf diese Weise kann beispielsweise vollständig auf die im Stand der Technik vorhandenen Führungsschienen und/oder Antriebseinheiten der Beschickungsvorrichtung verzichtet werden, was nicht nur die Konstruktion deutlich vereinfacht, sondern auch den Platzbedarf erheblich vermindert. Dabei ist zu beachten, dass beispielsweise bei einer gemeinsamen Führungseinrichtung keine Führungseinrichtung verwendet werden muss, die doppelt so groß bzw. lang ist, sondern die beiden Ausleger auf der gemeinsamen Führungseinrichtung derart angeordnet und betrieben werden können, dass ihre Bewegungsbereiche einander überschneiden und so eine deutlich verkleinerte Fläche für die Führungseinrichtung erzielt wird.

Durch diese Verschmelzung von Bearbeitungszentrum und Beschickungsvorrichtung wird darüber hinaus der Zugriff auf den Bearbeitungsraum des Bearbeitungszentrums deutlich erleichtert, was nicht nur ein gelegentliches manuelles Beschicken des Bearbeitungszentrums, sondern auch Wartungsarbeiten sowie Eingriffe bei Steuerungen und dergleichen deutlich erleichtert. Nicht zuletzt ermöglicht die erfindungsgemäße Verschmelzung auch eine vereinfachte Steuerung des gesamten Fertigungssystems. Diese Vorteile sind besonders ausgeprägt, wenn der erste und der zweite Ausleger sowohl eine gemeinsame Führungseinrichtung als auch einen gemeinsamen Antrieb aufweisen, was eine bevorzugte Ausführungsform der vorliegenden Erfindung darstellt.

Gemäß einer Weiterbildung der vorliegenden Erfindung ist der gemeinsame Antrieb in dem Bearbeitungszentrum zum Verfahren des ersten Auslegers in der sich horizontal erstreckenden X-Richtung vorgesehen. Mit dieser Anordnung wird erreicht, dass die Beschickungsvorrichtung eine besonders leichtgewichtige und platzsparende Konstruktion besitzt, während der gemeinsame Antrieb gezielt für die verschiedenen Arbeitsbewegungen des Auslegers des Bearbeitungszentrums genutzt werden kann. Dabei ist es besonders bevorzugt, dass der erste Ausleger und der zweite Ausleger mittels einer Kopplungseinrichtung miteinander koppelbar sind. In diesem Falle braucht der mit dem gemeinsamen Antrieb ausgestattete Ausleger des Bearbeitungszentrums nur während des Beschickungsvorganges mit der Beschickungsvorrichtung gekoppelt werden, so dass während des normalen Bearbeitungsbetriebes des Bearbeitungszentrums dessen Ausleger frei und unabhängig von der Beschickungsvorrichtung arbeiten kann, was die zu bewegenden Massen vermindert und somit eine hohe Präzision und Bearbeitungsgeschwindigkeit des Bearbeitungszentrums erlaubt.

Die Kopplungseinrichtung kann im Rahmen der vorliegenden Erfindung auf vielfältige Weise ausgestaltet sein, beispielsweise mechanisch, elektromagnetisch, etc. Gemäß einer bevorzugten Weiterbildung der vorliegenden Erfindung ist jedoch vorgesehen, dass die Kopplungseinrichtung ein erstes Eingriffselement, das an dem ersten Ausleger vorgesehen ist, und ein zweites Eingriffselement, das an dem zweiten Ausleger vorgesehen ist, aufweist. Hierdurch lässt sich auf einfache Weise eine zuverlässige Kopplung des Bearbeitungszentrums und der Beschickungsvorrichtung erzielen, die bei Bedarf auch problemlos wieder gelöst werden kann. Besonders vorteilhaft ist es, wenn die beiden Eingriffselemente durch loses Einrasten miteinander in Eingriff bringbar sind, da dann der erste Ausleger durch eine Verfahrbewegung den zweiten Ausleger ankoppeln kann.

Insbesondere wenn das Bearbeitungszentrum und die Beschickungsvorrichtung einen gemeinsamen Antrieb aufweisen, ist es gemäß einer Weiterbildung der vorliegenden Erfindung bevorzugt, dass das Bearbeitungszentrum und die Beschickungsvorrichtung auch eine gemeinsame Steuereinheit aufweisen, die eingerichtet ist, den Betrieb des Bearbeitungszentrums und der Beschickungsvorrichtung simultan zu steuern. Hierdurch wird nicht nur der Konstruktionsaufwand mit entsprechenden Kosteneinsparungen vermindert, sondern es können auch Schnittstellenprobleme vermieden werden, die bei den bisher eingesetzten, getrennten Steuereinheiten für Beschickungsvorrichtung und Bearbeitungszentrum auftreten können. Auch die Komplexität der Steuersoftware wird hierdurch vermindert. Nicht zuletzt ergibt sich auch eine vereinfachte Bedienung bzw. ein verminderter Schulungsbedarf für das Bedienpersonal.

Im Hinblick auf einen zügigen und flexiblen Beschickungsvorgang ist gemäß einer Weiterbildung der vorliegenden Erfindung vorgesehen, dass die mindestens eine Greifeinrichtung in der Y-Richtung und der Z-Richtung, die sich im Wesentlichen senkrecht zueinander sowie im Wesentlichen senkrecht zur X-Richtung erstrecken, unabhängig von den jeweils anderen Richtungen verfahrbar ist.

Gemäß einer weiteren bevorzugten Ausführungsform der vorliegenden Erfindung besitzt der zweite Ausleger zumindest drei langgestreckte Abschnitte, von denen sich jeweils einer in der X-Richtung, der Y-Richtung und der Z-Richtung erstreckt, die im Wesentlichen senkrecht zueinander sind. Durch diese Ausgestaltung kann eine platzsparende, gemeinsame Führungseinrichtung realisiert werden, wobei der Ausleger mit seinen drei langgestreckten Abschnitten den Zugriff auf einem beispielsweise neben dem Bearbeitungszentrum vorgesehenen Werkstückstapel ermöglicht.

Die Greifeinrichtung kann im Rahmen der vorliegenden Erfindung eine Vielzahl von Ausgestaltungen besitzen, die geeignet sind, ein plattenförmiges Werkstück sicher zu greifen und anzuheben. Dabei hat es sich als vorteilhaft erwiesen, dass die mindestens eine Greifeinrichtung jeweils eine Mehrzahl von Greifelementen aufweist, von denen jeweils mindestens eines verschwenkbar ist. Wie unten stehend noch ausführlicher erläutert werden wird, ermöglicht das mindestens eine, verschwenkbare Greifelement ein zügiges und präzises Anlegen der plattenförmigen Werkstücke an eine in dem Bearbeitungszentrum angeordnete Anschlaganordnung.

Im Hinblick auf eine hohe Förderkapazität der Beschickungsvorrichtung bei gleichzeitig einfacher Konstruktion ist gemäß einer Weiterbildung der vorliegenden Erfindung vorgesehen, dass mindestens zwei Greifeinrichtungen vorgesehen sind, die bevorzugt auf gegenüberliegenden Seiten des zweiten Auslegers angeordnet sind. Hierdurch können mindestens zwei Werkstücke simultan durch die Beschickungsvorrichtung dem Bearbeitungszentrum zugeführt werden. Allerdings besteht auch die Möglichkeit, die Greifeinrichtungen derart auszugestalten, beispielsweise mit einer hohen Anzahl von Greifelementen, dass jeder der Greifeinrichtungen auch mehrere Werkstücke fördern kann.

Um bei dem Bearbeitungszentrum des erfindungsgemäßen Fertigungssystems einen zügigen Arbeitsfortschritt und einen problemlosen Werkzeugwechsel zu ermöglichen, ist gemäß einer Weiterbildung der vorliegenden Erfindung vorgesehen, dass das Bearbeitungszentrum zwei unabhängig voneinander in Y- und Z-Richtung verfahrbare Hauptspindeln aufweist. Hierdurch können beispielsweise zwei Werkstücke simultan bearbeitet werden, oder es kann eine Hauptspindel ein Werkstück bearbeiten, während die andere Hauptspindel einen Werkzeugwechsel für einen nachfolgenden Bearbeitungsvorgang durchführt.

### Kurze Beschreibung der Zeichnungen

Fig. 1 zeigt schematisch eine Draufsicht einer ersten Ausführungsform des erfindungsgemäßen Fertigungssystems;
Fig. 2 zeigt schematisch eine Draufsicht einer zweiten Ausführungsform des erfindungsgemäßen Fertigungssystems.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

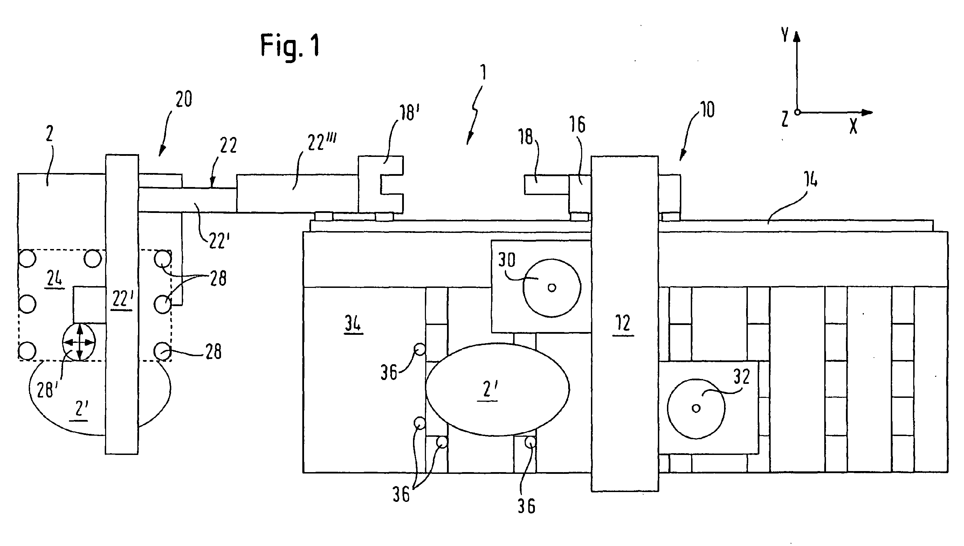

Fig. 1 zeigt eine schematische Draufsicht eines Fertigungssystems 1 als erste Ausführungsform der vorliegenden Erfindung. Das Fertigungssystem 1 umfasst ein Bearbeitungszentrum 10 zur spanenden Bearbeitung von plattenförmigen Werkstücken 2, die bevorzugt überwiegend aus Holz bzw. Holzwerkstoffen bestehen. Das Bearbeitungszentrum 10 besitzt einen an sich bekannten Aufbau mit einem ersten Ausleger 12, der entlang einer Führungsschiene 14 in einer sich horizontal erstreckenden X-Richtung verschiebbar ist. An dem Ausleger 12 sind auf gegenüberliegenden Seiten zwei Hauptspindeln 30, 32 angeordnet, die unabhängig voneinander in der in Fig. 1 angegebenen Y-Richtung sowie in der sich senkrecht zur Zeichenebene von Fig. 1 erstreckenden Z-Richtung verfahrbar sind. Der erste Ausleger 12 erstreckt sich über einen ersten Werkstücktisch 34, der eine Anschlageinrichtung 36 zum Positionieren zu bearbeitender Werkstücke sowie eine nicht gezeigte Aufspanneinrichtung zum Halten der zu bearbeitenden Werkstücke während des Bearbeitungsvorganges aufweist.

Das Fertigungssystem 1 umfasst ferner eine Beschickungsvorrichtung 20, die dazu dient, das Bearbeitungszentrum 10 mit plattenförmigen Werkstücken 2 zu beschicken, die anschließend in dem Bearbeitungszentrum 10 beispielsweise spanend bearbeitet werden. Die Beschickungsvorrichtung 20 besitzt einen zweiten Ausleger 22, der in der vorliegenden Ausführungsform durch drei langgestreckte Abschnitte 22', 22" und 22''' gebildet ist. Der zweite Ausleger 22 ist über seinen dritten Abschnitt 22''' derart mit der Führungsschiene 14 verbunden, dass er in der sich horizontal erstreckenden X-Richtung verschiebbar ist. An dem ersten Abschnitt 22' des zweiten Auslegers 22 ist in der vorliegenden Ausführungsform eine Greifeinrichtung 24 vorgesehen, die in der Y-Richtung und in der Z-Richtung verfahrbar und geeignet ist, die plattenförmigen Werkstücke 2 zu greifen und wieder frei zu geben.

Die Greifeinrichtung 24 besitzt eine Mehrzahl von Greifelementen 28, die in der vorliegenden Ausführungsform durch Vakuumsauger gebildet sind. Ferner besitzt die Greifeinrichtung 24 ein besonders ausgestaltetes Greifelement 28', das über ein mit einer Feder und einem Anschlagschalter ausgestattetes Gelenk verschwenkt werden kann, um die plattenförmigen Werkstücke 2 beim Ablegen ausrichten zu können, was später noch eingehender beschrieben wird.

Der dritte Abschnitt 22''' des zweiten Auslegers 22 besitzt an seinem dem Bearbeitungszentrum 10 zugewandten Ende ein Eingriffselement 18', das dazu vorgesehen ist, mit einem komplementären, ersten Eingriffselement 18 zusammenzuwirken, das an dem ersten Ausleger 12 vorgesehen ist. Bei den Eingriffselementen kann es sich beispielsweise um Elemente handeln, die einen lösbaren mechanischen Eingriff miteinander eingehen, wie beispielsweise eine Klinke und ein Bolzen. Allerdings muss der Eingriff zwischen diesen Elementen nicht formschlüssig erfolgen, sondern kann beispielsweise auch kraftschlüssig (beispielsweise durch Klemmelemente), magnetisch oder auf andere geeignete Weise erfolgen.

Obgleich in den Figuren nicht gezeigt, umfasst das erfindungsgemäße Fertigungssystem 1 ferner eine Steuereinheit, die eingerichtet ist, den Betrieb des Bearbeitungszentrums 10 und der Beschickungseinrichtung 20 simultan zu steuern. Unter Einsatz dieser Steuereinheit vollzieht sich der Betrieb des erfindungsgemäßen Fertigungssystems 1 beispielsweise wie folgt.

Zunächst wird die Greifeinrichtung 24 über den Stapel unbearbeiteter Werkstücke 2 in Y- und Z-Richtung derart verfahren, dass die Greifelemente 28, 28' die Oberseite des obersten plattenförmigen Werkstücks 2 greifen können. Simultan oder sequentiell hierzu wird der erste Ausleger 12 durch Betreiben des Antriebs 16 derart in Richtung der Beschickungsvorrichtung 20 verfahren, dass das erste Eingriffselement 18 und das zweite Eingriffselement 18' miteinander in Eingriff gelangen. Das Bearbeitungszentrum 10 und die Beschickungsvorrichtung 20 sind somit miteinander gekoppelt.

Diese Einheit wird nun durch Betreiben des Motors 16 entlang der Führungsschiene 14 derart verfahren, dass das zu bearbeitende Werkstück 2 oberhalb des Werkstücktisches 34 nahe einer gewünschten Bearbeitungsposition zum Liegen kommt. Nun wird das Werkstück 2 durch ein Verfahren der Greifeinrichtung 24 auf dem Werkstücktisch 34 abgelegt, und die Greifelemente 28 werden von dem Werkstück 2 gelöst, sodass das Werkstück nur noch mit dem schwenkbaren Greifelement 28' in Verbindung steht. Nun wird das nur noch durch das Greifelement 28' gehaltene Werkstück 2 weiter an die Anschlagbolzen 36 des Werkstücktisches herangeschoben und somit präzise in die gewünschte Bearbeitungsposition gebracht. Dabei wird das Greifelement 28' entgegen der Kraft der Gelenkfeder (nicht gezeigt) verschwenkt, bis ein Anschlagschalter (nicht gezeigt) betätigt wird, der den Verschiebevorgang beendet.

Daraufhin wird das Werkstück 2 mit einer nicht näher gezeigten Aufspanneinrichtung an dem Werkstücktisch 34 festgehalten.

Nun erfolgt der eigentliche Bearbeitungsvorgang des Werkstücks 2 durch das Bearbeitungszentrum 10 unter Einsatz von Bearbeitungswerkzeugen, die in die Hauptspindeln 30 und 32 jeweils nach Bedarf eingewechselt werden.

Obgleich der Bearbeitungsvorgang grundsätzlich auch bzw. zumindest zeitweise mit an das Bearbeitungszentrum 10 angekoppelter Beschickungsvorrichtung 20 erfolgen kann, ist es im Rahmen der vorliegenden Erfindung bevorzugt, dass die Beschickungsvorrichtung vor Beginn des Bearbeitungsvorganges in die in Fig. 1 gezeigte Ausgangsposition zurückgefahren und durch Trennen des ersten und des zweiten Eingriffselements von dem Bearbeitungszentrum 10 gelöst wird.

Nach Abschluss des Bearbeitungsvorganges wird die Beschickungsvorrichtung 20 erneut auf die oben beschriebene Weise an das Bearbeitungszentrum 10 angekoppelt, um anschließend das bearbeitete plattenförmige Werkstück 2' aufzunehmen und auf einem entsprechenden Stapel für bearbeitete plattenförmige Werkstücke 2', der beispielsweise neben dem Stapel für unbearbeitete plattenförmige Werkstücke angeordnet sein kann, abzulegen. Daraufhin beginnt der oben beschriebene Beschickungsvorgang erneut, um einen nachfolgenden Bearbeitungsvorgang vorzubereiten.

Sofern der Werkstücktisch 34 über mehrere geeignete Bearbeitungspositionen mit entsprechenden Anschlagelementen 36 verfügt, ist es ebenso möglich, bei jeder Verfahrbewegung der Beschickungsvorrichtung 20 ein unbearbeitetes plattenförmiges Werkstück 2 einzufördern bzw. ein bearbeitetes plattenförmiges Werkstück 2' auszufördern.

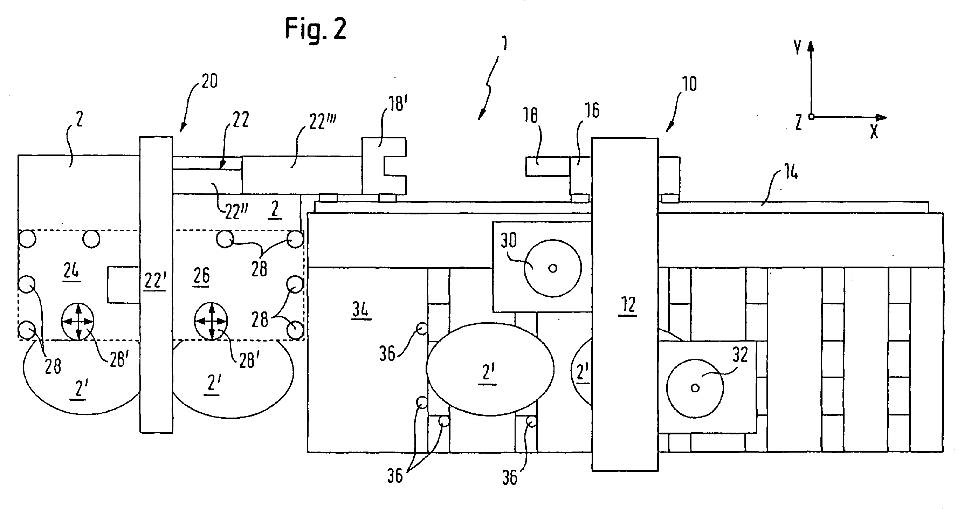

Ein Fertigungssystem 1 gemäß einer zweiten bevorzugten Ausführungsform der vorliegenden Erfindung ist schematisch in Fig. 2 dargestellt. Die in Fig. 2 gezeigte Ausführungsform unterscheidet sich von der in Fig. 1 gezeigten Ausführungsform primär dadurch, dass die Beschickungsvorrichtung 20 zwei Greifeinrichtungen 24, 26 aufweist, die auf gegenüberliegenden Seiten des zweiten Auslegers 22 angeordnet sind. Hierdurch wird es möglich, dass die Beschickungsvorrichtung 20 bei jeder Verfahrbewegung zwei oder sogar mehr plattenförmige Werkstücke 2 auf dem Werkstücktisch 34 ablegt bzw. entsprechende bearbeitete Werkstücke 2' vom Werkstücktisch 34 abholt. Im Übrigen unterscheidet sich der Betrieb des Fertigungssystems in der zweiten Ausführungsform nicht von denjenigen in der ersten Ausführungsform.

## Patentansprüche

1. Fertigungssystem (1), mit
einem Bearbeitungszentrum (10) zur spanendenden Bearbeitung von plattenförmigen Werkstücken (2), das einen ersten Ausleger (12) besitzt, der in einer sich horizontal erstreckenden X-Richtung verschiebbar ist und eine oder mehrere Spindeln aufweist, und
einer Beschickungsvorrichtung (20) zur Beschickung des Bearbeitungszentrums (10) mit plattenförmigen Werkstücken (2), die einen zweiten Ausleger (22), der in der sich horizontal erstreckenden X-Richtung verschiebbar ist, und mindestens eine Greifeinrichtung (24, 26), die in einer sich horizontal erstreckenden Y-Richtung entlang des zweiten Auslegers (22) und einer sich vertikal erstreckenden Z-Richtung verfahrbar ist, aufweist,
**dadurch gekennzeichnet, dass**
der erste (12) und der zweite (22) Ausleger eine gemeinsame Führungseinrichtung (14), entlang der sie in der X-Richtung verschiebbar sind, und/oder einen gemeinsamen Antrieb (16), mittels dessen sie in der X-Richtung verfahrbar sind, aufweisen.

2. Fertigungssystem nach Anspruch 1, **dadurch gekennzeichnet, das**s der gemeinsame Antrieb (16) in dem Bearbeitungszentrum (10) zum Verfahren des ersten Auslegers (12) in der sich horizontal erstreckenden X-Richtung vorgesehen ist.

3. Fertigungssystem nach Anspruch 1 oder 2, **dadurch gekennzeichnet, dass** der erste Ausleger (12) und der zweite Ausleger (22) mittels einer Kopplungseinrichtung (18, 18') miteinander koppelbar sind.

4. Fertigungssystem nach Anspruch 3, **dadurch gekennzeichnet, dass** die Kopplungseinrichtung ein erstes Eingriffselement (18), das an dem ersten Ausleger (12) vorgesehen ist, und ein zweites Eingriffselement (18'), das an dem zweiten Ausleger (22) vorgesehen ist, aufweist.

5. Fertigungssystem nach einem der vorhergehenden Ansprüche, **dadurch gekennzeichnet, dass** das Bearbeitungszentrum (10) und die Beschickungsvorrichtung (20) eine gemeinsame Steuereinheit aufweisen, die eingerichtet ist, den Betrieb des Bearbeitungszentrums (10) und der Beschickungsvorrichtung (20) simultan zu steuern.

6. Fertigungssystem nach einem der vorhergehenden Ansprüche, **dadurch gekennzeichnet, dass** die mindestens eine Greifeinrichtung (24, 26) in der Y-Richtung und in der Z-Richtung, die sich im wesentlichen senkrecht zueinander sowie im wesentlichen senkrecht zur X-Richtung erstrecken, unabhängig von den jeweils anderen Richtungen verfahrbar ist.

7. Fertigungssystem nach einem der vorhergehenden Ansprüche, **dadurch gekennzeichnet, dass** der zweite Ausleger (22) zumindest drei langgestreckte Abschnitte (22', 22", 22"') besitzt, von denen sich jeweils einer in der X-Richtung, der Y-Richtung und der Z-Richtung erstrecken, die sich im wesentlichen senkrecht zueinander sind.

8. Fertigungssystem nach einem der vorhergehenden Ansprüche, **dadurch gekennzeichnet, dass** die mindestens eine Greifeinrichtung (24, 26) jeweils eine Mehrzahl von Greifelementen (28) aufweist, von denen jeweils mindestens eines (28') verschwenkbar ist.

9. Fertigungssystem nach einem der vorhergehenden Ansprüche, **dadurch gekennzeichnet, dass** mindestens zwei Greifeinrichtungen (24, 26) vorgesehen sind, die bevorzugt auf gegenüberliegenden Seiten des zweiten Auslegers (22) angeordnet sind.

10. Fertigungssystem nach einem der vorhergehenden Ansprüche, **dadurch gekennzeichnet, dass** das Bearbeitungszentrum zwei unabhängig voneinander in Y-und Z-Richtung verfahrbare Hauptspindeln (30, 32) aufweist.

11. Fertigungssystem nach einem der vorhergehenden Ansprüche, **dadurch gekennzeichnet, dass** das Bearbeitungszentrum einen festen Werkstücktisch (34) mit einer Anschlageinrichtung (36) und einer Aufspanneinrichtung aufweist.

## Claims

1. Manufacturing system (1) having
a machining centre (10) for cutting plate-like workpieces (2) possessing a first extension arm (12) which is displaceable in an X direction extending horizontally and comprises one or more spindles, and
a feeding device (20) for feeding the machining centre (10) with plate-like workpieces (2) comprising a second extension arm (22) which is displaceable in the X direction extending horizontally and at least one gripping device (24, 26) which is movable in a horizontally extending Y direction along the second extension arm (22) and in a vertically extending Z direction,
**characterised in that**
the first (12) and the second (22) extension arm have a common guide device (14) along which they are displaceable in the X direction and/or a common drive (16) by means of which they are movable in the X direction.

2. Manufacturing system according to claim 1, **characterised in that** the common drive (16) is provided in the machining centre (10) for moving the first extension arm (12) in the horizontally extending X direction.

3. Manufacturing system according to claim 1 or 2, **characterised in that** the first extension arm (12) and the second extension arm (22) can be coupled to one another by means of a coupling device (18, 18').

4. Manufacturing system according to claim 3, **characterised in that** the coupling device comprises a first engaging element (18) provided on the first extension arm (12) and a second engaging element (18') provided on the second extension arm (22).

5. Manufacturing system according to any of the preceding claims, **characterised in that** the machining centre (10) and the feeding device (20) have a common control unit which is set up to control the operation of the machining centre (10) and the feeding device (20) simultaneously.

6. Manufacturing system according to any of the preceding claims, **characterised in that** the at least single gripping device (24, 26) is movable in the Y direction and in the Z direction, which extend substantially perpendicular to one another and substantially perpendicular to the X direction, independently of the respective other directions.

7. Manufacturing system according to any of the preceding claims, **characterised in that** the second extension arm (22) possesses three elongated sections (22', 22", 22"') of which one each extends in the X direction, Y direction and Z direction which are substantially perpendicular to one another.

8. Manufacturing system according to any of the preceding claims, **characterised in that** the at least single gripping device (24, 26) comprises in each case a plurality of gripping elements (28) of which in each case one (28') is pivotable.

9. Manufacturing system according to any of the preceding claims, **characterised in that** at least two gripping devices (24, 26) are provided which are preferably arranged on opposite sides of the second extension arm (22).

10. Manufacturing system according to any of the preceding claims, **characterised in that** the machining centre comprises two main spindles (30, 32) movable independently of one another in the Y and Z direction.

11. Manufacturing system according to any of the preceding claims, **characterised in that** the machining centre comprises a fixed workpiece bench (34) having a stop device (36) and a clamping device.

## Revendications

1. Système de fabrication (1), comprenant
un centre d'usinage (10) pour un usinage avec enlèvement de copeaux de pièces d'oeuvre (2) en forme de plaques, comprenant un premier bras articulé (12), déplaçable dans une direction X s'étendant horizontalement et présentant une ou plusieurs broches, et
un dispositif de chargement (20) pour charger le centre d'usinage (10) avec des pièces d'oeuvre (2) en forme de plaques, présentant un deuxième bras articulé (22) déplaçable dans la direction X s'étendant horizontalement, et au moins un dispositif de préhension (24, 26) déplaçable dans une direction Y s'étendant horizontalement, le long du deuxième bras articulé (22) et d'une direction Z s'étendant verticalement,
**caractérisé en ce que**
le premier (12) et le deuxième (22) bras articulés présentent un dispositif de guidage (14) commun, le long duquel ils sont déplaçables dans la direction X et/ou un entraînement (16) commun, au moyen duquel ils sont déplaçables dans la direction X.

2. Système de fabrication selon la revendication 1, **caractérisé en ce que** l'entraînement (16) commun est prévu dans le centre d'usinage (10), pour déplacement du premier bras articulé (12) dans la direction X s'étendant horizontalement.

3. Système de fabrication selon la revendication 1 ou 2, **caractérisé en ce que** le premier bras articulé (12) et le deuxième bras articulé (22) sont susceptibles d'être couplés ensemble à l'aide d'un dispositif de couplage (18, 18').

4. Système de fabrication selon la revendication 3, **caractérisé en ce que** le dispositif de couplage présente un premier élément de mise en prise (18) prévu sur le premier bras articulé (12), et un deuxième élément de mise en prise (18') prévu sur le deuxième bras articulé (22).

5. Système de fabrication selon l'une des revendications précédentes, **caractérisé en ce que** le centre d'usinage (10) et le dispositif de chargement (20) présentent une unité de commande commune, agencée pour commander simultanément le fonctionnement du centre d'usinage (10) et du dispositif de chargement (20).

6. Système de fabrication selon l'une des revendications précédentes, **caractérisé en ce que** le au moins un dispositif de préhension (24, 26) est déplaçable dans la direction Y et dans la direction Z, qui s'étendent sensiblement perpendiculairement l'une par rapport à l'autre ainsi que sensiblement perpendiculairement par rapport à la direction X, le déplacement se faisant indépendamment chaque fois des autres directions.

7. Système de fabrication selon l'une des revendications précédentes, **caractérisé en ce que** le deuxième bras articulé (22) présente au moins trois tronçons (22', 22", 22"') allongés, dont chaque fois l'un s'étend dans la direction X, dans la direction Y et dans la direction Z, les directions étant sensiblement perpendiculaires les unes aux autres.

8. Système de fabrication selon l'une des revendications précédentes, **caractérisé en ce que** le au moins un dispositif de préhension (24, 26) présente respectivement une pluralité d'éléments de préhension (28), dont chaque fois au moins l'un (28') est susceptible de pivoter.

9. Système de fabrication selon l'une des revendications précédentes, **caractérisé en ce que** au moins deux dispositifs de préhension (24, 26) sont prévus, disposés, de préférence, sur des côtés opposés du deuxième bras articulé (22).

10. Système de fabrication selon l'une des revendications précédentes, **caractérisé en ce que** le centre d'usinage présente deux broches principales (30, 32), déplaçables indépendamment l'une de l'autre dans la direction Y et dans la direction Z.

11. Système de fabrication selon l'une des revendications précédentes, **caractérisé en ce que** le centre d'usinage présente une table pour pièces d'oeuvre (34) fixe, avec un dispositif de butée (36) et un dispositif de montage par bridage.
